# EUROPEAN PATENT SPECIFICATION

(11) **EP 2 569 156 B1**
(45) Date of publication and mention of the grant of the patent: **22.10.2014**
(21) Application number: 11717672.7
(22) Date of filing: 09.05.2011
(51) Int. Cl.: C09J 5/04, B32B 37/12, B27D 1/04, B27M 3/00, B27G 11/00, E04C 3/14

(54) **Method of manufacturing a composite product**
Verfahren zur Herstellung eines Verbundstoffprodukts
Procédé de fabrication d'un produit composite

(30) Priority: 12.05.2010 US 333862 P; 12.05.2010 EP 10162636
(43) Date of publication of application: 20.03.2013
(73) Proprietor: Akzo Nobel Coatings International B.V., 6824 BM Arnhem (NL)
(72) Inventor: OLSSON, Lars Johan Philip, S-135 50 Tyresö (SE); RICCIUS, Henrik Arne Jonas, S-133 34 Saltsjöbaden (SE); FÄLDT, Sara Kristina, 138 35 Älta (SE)
(74) Representative: Akzo Nobel IP Department
(86) International application number: PCT/EP2011/057376
(87) International publication number: WO 2011/141402

(56) References cited:
- EP-A1- 0 016 740
- EP-A1- 2 163 590
- EP-A2- 0 259 042
- WO-A1-01/49489
- WO-A1-2004/104124
- US-A- 2 437 981
- US-A- 3 384 137
- US-A- 3 880 694
- US-A- 4 961 795

## Description

The invention relates to a method of manufacturing a composite product, wherein a plurality of elements are assembled by gluing them together under pressure with a glue comprising at least one first component and at least one second component, the method comprising applying glue to at least one surface of each element on which glue is to be applied, assembling the elements to a desired structure and subjecting the assembled elements to pressure in a press, which method further comprises controlling the relation between the second and first components of the glue applied. The invention also relates to an apparatus for applying glue, a computer program product and a computer readable medium.

Glue systems (also referred to as adhesive systems) comprising at least two components, such as resin and hardener, are commonly used for the manufacture of products comprising a plurality of elements that are assembled by gluing. In order to obtain high quality gluing the elements usually have to be maintained under pressure for a significant period of time, in some cases several hours, depending on, for example the glue system used, the temperature and other conditions at a production plant. The press time is often a limiting factor for the production capacity of a plant and renders it difficult to optimise the utilisation of a production plant.

It has been found that the press time is affected not only by the temperature of the elements, but also to a great extent by the relation between the components in the glue and can be significantly decreased by increasing the amount of hardener compared to the amount of resin. According to the invention, it has been found that this can be utilised for controlling the gluing in a way so the production can be planned more efficiently.

EP 16740 A1 discloses a process and a device for gluing materials with curable aminoplastic adhesives with separate application to the joint of a resin component and a hardener component. The rapidity of the hardener in combination with the resin, calculated as press-time at 20°C, can vary within wide limits but it is preferred that rapid-acting systems are used.

WO 2001/049489 discloses a method for the production of composite products in which the mixing ratio of hardener and glue may be controlled as a function of the waiting time for different elements before they are subjected to pressure. However, the press time is not dealt with.

WO 2004/104124 discloses a gluing method comprising applying an adhesive composition (A) comprising a solvent onto a surface of a first piece of material, drying off the solvent, applying a component (C) comprising a solvent onto a surface of a second piece of material and bringing together the two surfaces. The method is said to give high quality joints at short pressing times combined with a long maximum time frame between the end of the drying and the start of the pressing. However, controlling the ratio between applied components of an adhesive is not dealt with.

A first aspect of the invention concerns a method of manufacturing a composite product, wherein a batch of a plurality of elements are assembled by gluing them together under pressure with a glue comprising at least one first component comprising a resin and at least one second component comprising a hardener, the method comprising applying the at least one first component and at least one second component of the glue separately or as a mixture to at least one surface of each element on which glue is to be applied, assembling the elements to a desired structure and subjecting the assembled elements to pressure in a press, the method further comprising controlling the amount of the at least one second component compared to the amount of the at least one first component of the glue by a procedure comprising:
a. determining a desired press time tₚ for the elements in the batch and an estimated or a real value of the temperature T of the elements in the batch; and,
b. calculating the amount of the at least one second component of the glue to be applied compared to the amount of the at least one first component of the glue to be applied based on tₚ and T.

Another aspect of the invention concerns an apparatus for applying glue comprising at least one first component and at least one second component to elements for manufacturing of a composite product, said apparatus comprising a glue applicator, a conveyor for passing elements or groups of elements through the glue applicator, a control unit programmed to control the amount of the at least one second component compared to the amount of the at least one first component of the glue in accordance with the first aspect of the invention.

A further aspect of the invention concerns a computer program product that when executed on a computer, controls the amount of the at least one second component compared to the amount the at least one first component of the glue applied to elements being assembled by gluing them together under pressure in accordance with the first aspect of the invention.

Still a further aspect of the invention concerns a computer readable medium comprising instructions for bringing a computer to control the amount of the at least one second component compared to the amount of the at least one first component of the glue applied to elements being assembled by gluing them together under pressure in accordance with the first aspect of the invention.

In the art of gluing with glues comprising two components, the amount of the second component compared to the amount of the first component is usually expressed as WP, which is defined as weight parts of the second component per 100 weight parts of the first component. Thus, if equal amounts by weight of the two components are used, WP is 100, while if twice as much of the first component is used, WP is 50. In order to simplify the following description the term WP will be used hereinafter for expressing the amount of the at least one second component of the glue compared to the amount of the at least one first component of the glue.

The invention is applicable for the manufacturing of a variety of composite products from different kind of materials like metal, polymers, ceramics and wood, but is particularly advantageous when the composite product is a wooden product and the elements are pieces of wood, and particularly if the composite product is a layered product made by gluing lamellas or veneers together, for example laminated beams, plywood, edge glued panels (EGP), cross laminated timber (CLT) and laminated veneer lumber (LVL).

The first component of the glue comprises a resin, such as PRF (phenol resorcinol formaldehyde), RF (resorcinol formaldehyde), amino resins like UF (urea formaldehyde), MF (melamine formaldehyde) and MUF (Melamine Urea Formaldehyde), PUR (Poly urethane), dispersions of synthetic or natural polymers such as those comprising homo-or co-polymers of vinylacetate, and/or other monomers, proteins based resins and starch based resins.

The second component of the glue comprises a hardener, preferably including one or more substances capable of initiating cross-linking of the resin. The kind of hardener depends on the resin used. For example, formaldehyde based hardeners may be used for PRF and RF resins, acidic hardeners may be used for amino resins and isocyanate hardeners may be used for polymer dispersions.

The first and the second components of the glue can be applied separately to the elements or be mixed before application. A more detailed description of some suitable glue systems comprising a resin and a hardener can be found in the literature, for example in EP 501174, WO 93/24582, WO 99/67028, WO 2001/070898, WO 2009/005461, WO 02/068178, WO 99/048991, WO 2011/009811 and WO 2011/009812.

The press time tₚ refers to the total time all parts of the entire elements in a batch are subjected to pressure in the press. The desired press time tₚ is determined based on the production target and the production capacity in a specific production plant. The shortest possible press time that can be used without defective gluing depends on the specific glue system used, the kind of composite product and conditions such as temperature of the elements, humidity etc. The upper limit is determined by the production targets. In most cases a suitable press time may, for example, be from about 1 to about 1200 minutes or from about 10 to about 400 minutes.

The temperature T may be a real value determined by measuring the temperature of the elements to be assembled in the batch or an estimated value, for example based on measurement of the temperature of one or a few elements in the batch to be assembled, the ambient temperature where the elements are stored or measurement of the temperatures of the elements in a previous batch. If an estimation is based on measurements of the elements of the previous batch or of only a few elements in the batch to be assembled, it is preferred to determine T to the lowest temperature measured. The determination may be made automatically or manually by an operator. In most cases the temperature T is from about 0 to about 60°C or from about 15 to about 40°C.

The WP is calculated based on tₚ and T. If the first component is a resin and the second component a hardener, a decreased press time tₚ requires an increased WP, i.e. an increased amount of hardener compared to the amount of resin. Similarly, a decreased temperature T of the elements requires an increased WP. Thus, the WP is increased with decreased tₚ and T, and vice versa. The WP for a certain press time tₚ and temperature T depends primarily on the kind of glue and can easily be determined experimentally by a person skilled in art for the conditions in each case. The data may be stored in a computer used for the control procedure in the gluing. Although not necessary, it is possible to also take account of other parameters, like the humidity, the assembly time of the elements, etc.

For each specific glue system, there is usually a range for the WP within which it is possible to operate without defective gluing. If the calculated WP is outside that range, it is preferably set to the closest value within the range and the press time tₚ is adjusted to fit with that value. For many glue systems comprising a resin as the first component and a hardener as the second component the possible WP may, for example, be from about 1 to about 1000 or from about 5 to about 300.

The amount of glue applied to each element on which glue is to be applied may be based solely on experience with the specific kind of glue and production plant or be calculated based on the assembly time for the element and optionally also other conditions such as the WP, the temperature of the elements, the humidity etc. The amount of glue may be the same for all elements to which glue is to be applied in a batch, or be decreased for each element based on the assembly time t_{CAi} for each specific element as described in co-pending patent application claiming priority from EP 10162635.6.

The exact amount of glue for a certain assembly time depends primarily on the kind of glue, the temperature of the elements and the WP and can easily be determined experimentally by a person skilled in art for the conditions in each case. The data may be stored in a computer used for the control procedure in the gluing. In many cases a suitable amount of glue may, for example, be from about 50 to about 1000 g/m² or from about 100 to about 500 g/m².

Similarly, the WP may be the same for each element on which glue is to be applied and may then be calculated based on tₚ and the real or an estimated temperature of the coldest element in the batch. However, WP may also be adjusted for each element based on the temperature of each specific element and optionally also other parameter such as the assembly time t_{CAi} for each specific element. It is also possible to adjust the recommended press time if an originally estimated temperature deviates significantly from temperatures measured.

The assembly time t_{CAi} for a specific element in a batch refers to the time it takes from the point when the first glue is applied to the element till all parts of the entire element is subjected to pressure in the press and depends on the number of elements, the kind and size of the elements, the kind of glue and the specific production line. In many cases the assembly time t_{CA1} for the first element in a batch may, for example, be from about 2 to about 1100 minutes or from about 4 to about 500 minutes.

The term batch of elements as used herein refers to all elements that simultaneously are subjected to pressure in the same press. The batch may include one or more composite products, such as laminated beams, depending on the size of the products and the size of the press. The number of composite products in a batch may, for example, be from 1 to about 500.

It is usually sufficient to apply glue to one of two surfaces to be joined, which means that for each composite product made there will in most cases be one element, normally the first or the last one, on which glue is not to be applied. When more than one composite product is made in a batch, there may then be several elements on which glue is not to be applied. Which ones of the elements in a batch on which glue is not to be applied, is preferably determined beforehand, for example in the daily production planning.

The number of elements in a batch depends on the press and on the kind of composite product manufactured and may, for example, be from 2 to 1000 or more, or from 5 to 300. For laminated beams, the number of elements is preferably from 2 to 200 or from 3 to 100. For plywood, the number of elements is preferably from 2 to 1000 or from 5 to 300.

In a possible mode of operation a computer such as a PLC (Programmable Logical Controller) gets the information regarding the desired press time (e.g. tₚ = 100 min) and the real or estimated temperature of the elements in the batch (e.g. T = 20°C) from a human operator or via communication from a supervisory control system. The PLC will then automatically calculate the necessary WP between the components of the glue to meet the required press time based on the properties of the glue system used and optionally other parameters. The necessary WP varies considerably depending on the glue system, but can easily be determined experimentally by a person skilled in the art for a specific glue system at various press times, temperatures and optionally other conditions and be transformed to a formula for that specific glue system, which formula can be used by the PLC for the calculations.

Through the invention it is possible to utilize a production plant in the most efficient way as the press time can be selected to fit the production targets within the working hours. For example, if the production target for a day is three batches, the assembly time t_{CA1} for each batch is fixed for the specific production line while the press time for the first two batches can be selected so all elements of the third batch have been assembled and the press can start just before the end of the working day. The press time for the third batch is then preferably longer as it may remain in the press during the night until the next working day begins. The advantage of a longer press time for the third batch is that the required amount of hardener compared to resin can be lower, thus saving raw materials as it then is possible to use a lower amount of at least one component of the glue, for example a hardener. On the other hand, the increased use of that component (e.g. the hardener) for the first two batches is more than compensated for by the increased production capacity.

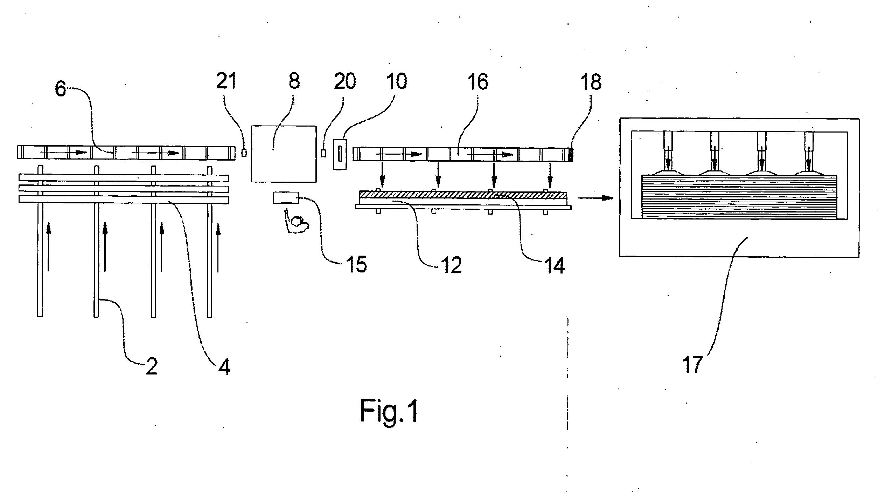

An embodiment of the invention will now be described with reference to Fig.1 schematically showing the manufacture of a laminated beam consisting of a stack of individual lamellas glued and pressed together to form the beam. However, the principle is usable for all kinds of products that are glued together and subjected to pressure for hardening the glue.

The manufacturing station comprises a supply unit 2 for individual lamellas 4. The supply unit can be any kind of transport device that is able to position one or more lamellas at a time on a conveyor belt 6 or the like, used for feeding the lamellas into the processing portion of the manufacturing station. The supply unit could even be an operator, manually placing each individual lamella on said conveyor.

The processing portion shown comprises five units: a planer device 8 (optional); a glue applicator 10; a stacking unit 12 (optional) where a "precursor beam" 14 is assembled; a control unit 15 (e.g. a PLC or other processor device) and operating panel; and a press 17.

The control unit 15 is supplied with data for the specific product to be manufactured, either by an operator or in digital form from a central computer or by data on any kind of data carrier.

In operation the following procedure takes place: A first lamella 4 is placed on the conveyor or feeder 6, fed into the planer device 8, where the lamella is suitably surface machined, if it is not already planed. This unit comprises guide rolls and machining tools, and therefore it can also be used for controlling the speed of the lamella through the station. However, the planer device can be dispensed with if the raw material is of high quality and does not need to be treated, and if the speed of the lamellas can be controlled by the conveyor 6, or by the glue applicator 10.

After having (optionally) been surface machined, the lamella 4 is fed through the glue applicator 10 that, for example, may be of a string type, a curtain type or any other commonly used type of applicator, applying resin and hardener separately or as a premixed composition. The WP has been calculated based on at least the press time set to fit with the production target and the temperature of the coldest lamella, as measured or estimated. The WP may optionally be adjusted for each lamella. The glue amount that is applied to the lamella may be controlled in a way so to vary from lamella to lamella automatically according to a control program, adapted for each individual product type, glue system and environmental conditions prevailing in the plant.

A sensor 20 for counting the number of lamellas passing the glue applicator may provide data to the control unit 15 as a basis for calculating the amount of glue to be applied on each lamella. One or more sensors 21 may also be arranged for measuring the temperature, moisture content and or other parameters for each lamella and provide the data to the control unit as a basis for calculating the WP and optionally the amount of glue to be applied.

It is to be understood that the manufacturing station also may be operated so two or more lamella are placed on the conveyer in parallel and consequently pass the glue applicator 10 simultaneously. The sensor 20 will then count each time one or more lamellas simultaneously pass the glue applicator 10.

The amount of glue to be applied to each lamella may be controlled based on the assembly time for the respective lamella, for example by controlling the flow of glue, controlling the surface covered by the glue applicator, controlling the speed of a lamella through the glue applicator or any combination thereof.

After having been provided with an appropriate amount of glue, the lamella 4 exiting from the glue applicator 10 will be moved forwards by a second conveyor 16 to a stop 18. Then the lamellas will be moved from the conveyor 16 to the side where they are placed on top of each other until the desired number of lamellas have been assembled to a pile or stack. The assembly is then transported to a press where the pile is subjected to a suitable pressure, and if required to heat, for a sufficient period of time to harden the glue.

There are several possible types of presses usable for the manufacture of laminated products. For example, a full length press will exert a pressure over the entire assembly of glued lamellas at one and the same time, and thus all parts will be pressed simultaneously, therefore the pressing operation itself will not cause any additional waiting times to be considered in the glue application. On the other hand, a section press will press only part of the assembly in a first pressing operation, and then continue along the length of the assembly in several operations, that may or may not be overlapping. In this case the last section to be pressed has to wait additional time, and thus the amount of glue to be applied to various parts of each lamella may be calculated in accordance therewith. A further alternative is a continuously working press, i.e. the pressure is applied by means of rollers acting on the upper surface of the pile or stack of lamellas. The assembly is then fed continuously through the press and the amount of glue applied to the different parts of each lamella may be calculated based on varying waiting time over the length of the lamellas.

## Claims

1. A method of manufacturing a composite product, wherein a batch of a plurality of elements are assembled by gluing them together under pressure with a glue comprising at least one first component comprising a resin and at least one second component comprising a hardener, the method comprising applying the at least one first component and at least one second component of the glue separately or as a mixture to at least one surface of each element on which glue is to be applied, assembling the elements to a desired structure and subjecting the assembled elements to pressure in a press, **characterised by** the method further comprising controlling the amount of the at least one second component compared to the amount of the at least one first component of the glue by a procedure comprising:
a. determining a desired press time tₚ for the elements in the batch and an estimated or a real value of the temperature T of the elements in the batch; and,
b. calculating the amount of the at least one second component of the glue to be applied compared to the amount of the at least one first component of the glue to be applied based on tₚ and T.

2. The method as claimed in claim 2, wherein the composite product is a wooden layered product.

3. The method as claimed in claim 3, wherein the wooden layered product is a laminated beam.

4. The method as claimed in claim 3, wherein the wooden layered product is plywood.

5. The method as claimed in any one of the claims 1-4, wherein tₚ is from about 1 to about 1200 minutes.

6. The method as claimed in any one of the claims 1-5, wherein the temperature T is from about 0 to about 60°C.

7. The method as claimed in any one of the claims 1-6, wherein said resin is an amino resin.

8. The method as claimed in any one of the claims 1-7, wherein said hardener is acidic.

9. The method as claimed in any one of the claims 1-8, wherein said first and second components of the glue are applied separately to the elements.

10. The method as claimed in any one of the claims 1-9, wherein said first and second components of the glue are first mixed and then applied to the elements.

11. An apparatus for applying glue to elements for manufacturing of a composite product, said apparatus comprising a glue applicator, a conveyor for passing elements or groups of elements through the glue applicator, a control unit programmed to control the amount of the at least second component compared to the amount of the at least one first component of the glue according to any one of the clams 1-10.

12. A computer program product that when executed on a computer, controls the amount of the at least one second component compared to the amount of the at least one first component of glue applied to elements being assembled by gluing them together under pressure according to any one of the clams 1-10.

13. A computer readable medium comprising instructions for bringing a computer to control the amount of the at least one second component compared to the amount of the at least one first component of glue applied to elements being assembled by gluing them together under pressure according to any one of the clams 1-10.

## Patentansprüche

1. Verfahren zur Herstellung eines Verbundstoffproduktes, wobei eine abgeteilte Menge einer Vielzahl von Elementen zusammengefügt wird, indem sie unter Druck mit einem Klebstoff zusammengeklebt werden, wobei der Klebstoff mindestens eine erste Komponente mit einem Harz aufweist, und mindestens eine zweite Komponente mit einem Härtemittel aufweist, wobei das Verfahren folgendes aufweist: Aufbringen der mindestens einen ersten Komponente und der mindestens einen zweiten Komponente des Klebstoffes getrennt oder als Mischung auf mindestens eine Oberfläche jedes Elementes, auf die Klebstoff aufgebracht werden soll, Zusammenfügen der Elemente zu einer gewünschten Konstruktion und Unterdrucksetzen der zusammengefügten Elemente in einer Presse,
**dadurch gekennzeichnet,**
**dass** das Verfahren weiterhin die Einstellung der Menge der mindestens einen zweiten Komponente im Vergleich zu der Menge der mindestens einen ersten Komponente des Klebstoffes durch ein Verfahren aufweist, das folgendes aufweist:
a. Festlegen einer gewünschten Presszeit tₚ für die Elemente in der abgeteilten Menge und eines Schätzwertes oder tatsächlichen Wertes der Temperatur T der Elemente in der abgeteilten Menge; und
b. Berechnen der Menge der mindestens einen zweiten Komponente des aufzubringenden Klebstoffes im Vergleich zu der mindestens einen ersten Komponente des aufzubringenden Klebstoffes basierend auf tₚ und T.

2. Verfahren nach Anspruch 2, wobei das Verbundstoffprodukt ein geschichtetes Holzprodukt ist.

3. Verfahren nach Anspruch 3, wobei das geschichtete Holzprodukt ein Verbundträger ist.

4. Verfahren nach Anspruch 3, wobei das geschichtete Holzprodukt Sperrholz ist.

5. Verfahren nach einem der Ansprüche 1-4, wobei tₚ von ca. 1 bis ca. 1200 Minuten reicht.

6. Verfahren nach einem der Ansprüche 1-5, wobei die Temperatur von ca. o bis ca. 60°C reicht.

7. Verfahren nach einem der Ansprüche 1-6, wobei das Harz ein Aminoharz ist.

8. Verfahren nach einem der Ansprüche 1-7, wobei das Härtemittel sauer ist.

9. Verfahren nach einem der Ansprüche 1-8, wobei die erste und zweite Komponente des Klebstoffes separat auf die Elemente aufgebracht werden.

10. Verfahren nach einem der Ansprüche 1-9, wobei die erste und zweite Komponente des Klebstoffes zuerst gemischt und dann auf die Elemente aufgebracht werden.

11. Vorrichtung zum Aufbringen von Klebstoff auf Elemente zur Herstellung eines Verbundstoffproduktes, wobei die Vorrichtung aufweist einen Klebeapplikator, ein Förderband zum Führen der Elemente oder Gruppen von Elementen durch den Klebeapplikator, und eine Steuereinheit, die programmiert ist, um die Menge der mindestens zweiten Komponente im Vergleich zu der Menge der mindestens ersten Komponente des Klebstoffes nach einem der Ansprüche 1-10 zu kontrollieren.

12. Computerprogramm-Produkt, das bei Ausführen auf einem Computer die Menge der mindestens einen zweiten Komponente im Vergleich zu der Menge der mindestens einen ersten Komponente an Klebstoff, der auf Elemente aufgebracht wird, die zusammengefügt werden, indem sie nach einem der Ansprüche 1-10 unter Druck zusammengeklebt werden, einstellt.

13. Computerlesbarer Datenträger mit Anweisungen, um einen Computer dazu zu bringen, die Menge der mindestens einen zweiten Komponente im Vergleich zu der Menge der mindestens einen ersten Komponente an Klebstoff einzustellen, der auf Elemente aufgebracht wird, die zusammengefügt werden, indem sie nach einem der Ansprüche 1-10 unter Druck zusammengeklebt werden.

## Revendications

1. Procédé de fabrication d'un produit composite, dans lequel un lot d'une pluralité d'éléments sont assemblés en les collant ensemble sous pression avec une colle comprenant au moins un premier composant comprenant une résine et au moins un deuxième composant comprenant un durcisseur, le procédé comprenant le fait d'appliquer l'au moins un premier composant et au moins un deuxième composant de la colle séparément ou sous forme d'un mélange sur au moins une surface de chaque élément sur lequel doit être appliquée de la colle, d'assembler les éléments sur une structure souhaitée et de soumettre les éléments assemblés à une pression dans une presse, **caractérisé en ce que** le procédé comprend en outre la commande de la quantité de l'au moins un deuxième composant par rapport à la quantité de l'au moins un premier composant de la colle par une procédure comprenant le fait :
a. de déterminer un temps de pressage souhaité tₚ pour les éléments dans le lot et une valeur estimée ou réelle de la température T des éléments dans le lot ; et,
b. de calculer la quantité de l'au moins un deuxième composant de la colle devant être appliquée par rapport à la quantité de l'au moins un premier composant de la colle devant être appliquée sur la base de tₚ et T.

2. Procédé tel que revendiqué dans la revendication 2, dans lequel le produit composite est un produit en bois stratifié.

3. Procédé tel que revendiqué dans la revendication 3, dans lequel le produit en bois stratifié est une poutre lamellée.

4. Procédé tel que revendiqué dans la revendication 3, dans lequel le produit en bois stratifié est le contre-plaqué.

5. Procédé tel que revendiqué dans l'une quelconque des revendications 1 à 4, dans lequel tₚ est d'environ 1 à environ 1200 minutes.

6. Procédé tel que revendiqué dans l'une quelconque des revendications 1 à 5, dans lequel la température T est d'environ 0 à environ 60°C.

7. Procédé tel que revendiqué dans l'une quelconque des revendications 1 à 6, dans lequel ladite résine est une résine amino.

8. Procédé tel que revendiqué dans l'une quelconque des revendications 1 à 7, dans lequel ledit durcisseur est acide.

9. Procédé tel que revendiqué dans l'une quelconque des revendications 1 à 8, dans lequel lesdits premier et deuxième composants de la colle sont appliqués séparément sur les éléments.

10. Procédé tel que revendiqué dans l'une quelconque des revendications 1 à 9, dans lequel lesdits premier et deuxième composants de la colle sont d'abord mélangés et ensuite appliqués sur les éléments.

11. Appareil permettant d'appliquer de la colle sur des éléments pour la fabrication d'un produit composite, ledit appareil comprenant un applicateur de colle, un convoyeur pour faire passer des éléments ou des groupes d'éléments à travers l'applicateur de colle, une unité de commande programmée pour commander la quantité de l'au moins un deuxième composant par rapport à la quantité de l'au moins un premier composant de la colle selon l'une quelconque des revendications 1 à 10.

12. Produit de programme informatique qui, lorsqu'il est exécuté sur un ordinateur, commande la quantité de l'au moins un deuxième composant par rapport à la quantité de l'au moins un premier composant de la colle appliquée sur des éléments étant assemblés en les collant ensemble sous pression selon l'une quelconque des revendications 1 à 10,

13. Support lisible par ordinateur comprenant des instructions permettant d'amener un ordinateur à commander la quantité de l'au moins un deuxième composant par rapport à la quantité de l'au moins un premier composant de la colle appliquée sur des éléments étant assemblés en les collant ensemble sous pression selon l'une quelconque des revendications 1 à 10.
